(19) Europäisches Patentamt
European Patent Office
Office européen des brevets

(11) Veröffentlichungsnummer: **0 254 722**
**B1**

(12) **EUROPÄISCHE PATENTSCHRIFT**

(45) Veröffentlichungstag der Patentschrift: **13.06.90**

(21) Anmeldenummer: **86905287.8**

(22) Anmeldetag: **10.09.86**

(86) Internationale Anmeldenummer:
**PCT/EP86/00522**

(87) Internationale Veröffentlichungsnummer:
**WO 87/02044 09.04.87 Gazette 87/08**

(51) Int. Cl.$^5$: **C 08 G 59/62,** C 08 G 59/42, C 08 L 63/00, C 09 D 115/02, C 09 D 133/08, C 08 L 33/06

# (54) HÄRTBARE ZUSAMMENSETZUNG.

(30) Priorität: **30.09.85 DE 3534910**

(43) Veröffentlichungstag der Anmeldung:
**03.02.88 Patentblatt 88/05**

(45) Bekanntmachung des Hinweises auf die Patenterteilung:
**13.06.90 Patentblatt 90/24**

(84) Benannte Vertragsstaaten:
**AT BE CH DE FR GB IT LI NL SE**

(56) Entgegenhaltungen:
**EP-A-0 134 691**
**DE-A-2 630 011**
**FR-A-2 432 542**

**Chemical Abstracts, volume 97, Nr. 24, 13 December 1982, Columbus, Ohio (US), see page 36, abstract 199044y & JP, A, 8284843 ( MATSUHITA ELECTRIC WORKS LTD.), 27 May 1982**

(73) Patentinhaber: **BASF Lacke + Farben Aktiengesellschaft**
**Max-Winkelmann-Strasse 80**
**D-4400 Münster (DE)**

(72) Erfinder: **JUNG, Werner**
**Uhrwerkerstrasse 65**
**D-4715 Ascheberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 254 722 B1

**Beschreibung**

Die Erfindung betrifft eine härtbare Zusammensetzung, enthaltend ein lösliches hydroxylgruppenhaltiges Acrylatcopolymerisat, eine Verbindung mit mindestens zwei cyclischen Carbonsäureanhydridgruppen pro Molekül und eine Verbindung mit mindestens zwei Epoxidgruppen pro Molekül.

Überzugszusammensetzungen, die als wesentliches Bindemittel ein hydroxylgruppenhaltiges Acrylatcopolymerisat enthalten, sind gut bekannt. Als Vernetzer für diese hydroxylgruppenhaltigen Acrylatcopolymerisate werden häufig Aminoplastharze, z.B. alkylierte Melamin-Formaldehyd-Harze, eingesetzt. Derartige Zusammensetzungen härten bei Temperaturen ab 80°C aus. In vielen Fällen wird in diesen Systemen als Katalysator eine starke Säure, beispielsweise p-Toluolsulfonsäure, eingesetzt.

Für viele Anwendungszwecke ist es jedoch vorteilhaft, daß Überzugszusammensetzungen bei Raumtemperatur oder leicht erhöhter Temperatur aushärten, beispielsweise bei der Autoreparaturlackierung.

Aus der EP—B—64 338 ist ein hydroxylgruppenhaltiges Acrylatcopolymerisat, welches mit einem Aminoplastharz unter Verwendung einer speziellen Katalysatormischung gehärtet wird, bekannt. Diese Überzugszusammensetzung kann bei Raumtemperatur gehärtet werden, sie hat allerdings den Nachteil, daß die auf dieser Überzugszusammensetzung basierenden Überzüge eine unzureichende Beständigkeit gegenüber Wasser bzw. Wasserdampf haben.

Weiterhin sind bei Raumtemperatur aushärtende Systeme auf Basis einer Epoxy-Carboxy-Vernetzung bekannt. Die EP—A—123 793 beschreibt bereits bei Raumtemperatur aushärtende Zusammensetzungen, bestehend aus Polyepoxiden und Polymeren, welche Carboxylgruppen und tertiäre Aminogruppen enthalten und erhältlich sind durch Reaktion von Säureanhydrid und Carboxylgruppen enthaltenden Vinylpolymeren mit Verbindungen, die mindestens einen aktiven Wasserstoff, der zur Reaktion mit den Säureanhydriden befähigt ist und mindestens eine tertiäre Aminogruppen enthalten, wie beispielsweise tertiäre Aminoalkohole. Die beschriebenen Zusammensetzungen haben den Vorteil, daß sie bereits bei Raumtemperatur aushärten, eine gute Benzin-, Wasser- und Alkalibeständigkeit aufweisen und daß keine unerwünschten Verfärbungen, die auf tertiäre Aminoverbindungen zurückzuführen sind, auftreten.

Aus der EP—A—134 691 sind härtbare Zusammensetzungen bekannt, die eine Verbindung mit mindestens zwei Hydroxylgruppen pro Molekül, eine Verbindung mit mindestens zwei cyclischen Carbonsäureanhydridgruppen pro Molekül und eine Verbindung mit mindestens zwei Epoxidgruppen pro Molekül enthalten. Als geeignete hydroxylgruppenhaltige Polymere werden sowohl Kondensations- als auch Polymerisationsprodukte genannt. Gemäß dieser Patenanmeldung werden hydroxylgruppenhaltige Acrylatcopolymerisate zusammen mit Bis- bzw. Polycarbonsäureanhydriden und Bis- bzw. Polyepoxiden, gegebenenfalls unter Mitverwendung eines Katalysators, vermischt und zusammen mit Lösungsmitteln und Additiven zu einer bereits bei Raumtemperatur aushärtenden Überzugszusammensetzung verarbeitet.

Die Aufgabe der vorliegenden Erfindung besteht darin, die Eigenschaften von Überzügen auf der Basis einer Epoxy-Carboxy-Vernetzung zu verbessern in Hinsicht der Beständigkeit gegenüber Chemikalien, Lösungsmitteln, hinsichtlich der Benzinfestigkeit, der Beständigkeit gegenüber Wasser bzw. Wasserdampf, hinsichtlich der Elastizität und der Korrosionsbeständigkeit. Außerdem ist es wünschenswert, daß die Überzugszusammensetzungen gegebenenfalls bei Raumtemperatur aushärten und damit beispielsweise in der Autoreparaturlackierung einsetzbar sind.

Diese Aufgabe wird überraschenderweise dadurch gelöst, daß als hydroxylgruppenhaltiges Acrylatcopolymerisat ein Acrylatcopolymerisat eingesetzt wird, welches einen hohen Anteil an einpolymerisierten, mehrfach ethylenisch ungesättigten Monomeren enthält. Mittels der in der härtbaren Zusammensetzung eingesetzten Acrylatcopolymerisate können niedrige Viskositäten bei relativ hohem Festkörpergehalt erzielt werden, außerdem wird durch die stark verzweigte Struktur der Copolymerisate eine hohe Reaktivität der Hydroxylgruppen gegenüber den weiteren funktionellen Gruppen der härtbaren Zusammensetzung erzielt.

Die Erfindung wird durch die härtbare Zusammensetzung der eingangs genannten Art gelöst, die dadurch gekennzeichnet ist, daß das hydroxylgruppenhaltige Acrylatcopolymerisat erhältlich ist aus

a1) 10 bis 60 Gewichts-%, vorzugsweise 15 bis 60 Gewichts-%, hydroxylgruppenhaltigen Estern der Acrylsäure und/oder Methacrylsäure mit 2 bis 14 Kohlenstoffatomen im Alkylrest,

a2) mehr als 3, jedoch maximal 30 Gewichts-%, vorzugsweise 5 bis 25 Gewichts-%, Monomeren mit mindestens zwei polymerisierbaren, olefinisch ungesättigten Doppelbindungen und

a3) 15 bis 82 Gewichts-%, vorzugsweise 40 bis 70 Gewichts-%, weiteren polymerisierbaren Monomeren mit einer olefinisch ungesättigten Doppelbindung,

wobei die Summe der Komponenten a1, a2 und a3 100 Gewichts-% beträgt.

Die Auswahl der weiteren polymerisierbaren Monomeren der Komponente a3 ist nicht besonders kritisch. Sie können ausgewählt sein aus der Gruppe Styrol, Vinyltoluol, Acrylsäure, Methacrylsäure, Crotonsäure, Itaconsäure, Alkylester der Acryl- und Methacrylsäure, Alkoxyethylacrylate und Aryloxyethylacrylate und der entsprechenden Methacrylate, Ester der Malein- und Fumursäure. Als Beispiele seien geannnt Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacryl, Octylmethacrylat, 3,5,5-Trimethylhexylmethacrylat, Decylmethacryl, Dodecylmethacrylat, Hexadecylmethacrylat, Octadexylmethacrylat, Butoxyethylacrylat, Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen. Die Auswahl der Komponente a3 richtet sich weitgehend nach den gewünschten Eigenschaften der härtbaren Zusammensetzung in bezug auf Elastizität, Härte, Verträglichkeit und Polarität.

Als Komponente a3 können vorteilhafterweise unter anderem auch 0,1 bis 20 Gew.-%, vorzugsweise 1 bis 14 Gew.-%, bezogen auf das Gesamtgewicht aller Monomerer, tertiärer Amine mit einer polymerisierbaren, olefinisch ungesättigten Doppelbindung verwendet werden, beispielsweise N,N'-Dimethylaminoethylmethacrylat, N,N-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin. Durch diese in das Acrylatcopolymerisat eingebauten tertiären Aminogruppen wird der Vorteil erzielt, daß sie eine spätere Carboxy-Epoxy-Vernetzung katalysieren.

Als Komponente a2 können vorteilhaft Verbindungen der allgemeinen Formel

$$CH_2{=}\overset{R}{\overset{:}{C}}-\overset{O}{\overset{\|}{C}}-X-(CH_2)_n-X-\overset{O}{\overset{\|}{C}}-\overset{R}{\overset{:}{C}}{=}CH_2$$

R = H oder $CH_3$,
X = O, NR' S mit R' = H, $CH_3$
n = 2 bis 8
verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylpropantriacrylat, Trimethylolpropantrimethacrylat und ähnliche Verbindungen. Selbstverständlich können auch Kombinationen der mehrfach ungesättigten Monomeren eingesetzt werden. Weiterhin ist Divinylbenzol als geeignete Komponente a2 zu nennen. Dabei ist zu beachten, daß, wenn als Komponente a3 unter anderem tertiäre Amine mit einer olefinisch ungesättigten Doppelbindung verwendet werden, als Komponente a2 keine Di- und Polyester von Di- und Polyolen mit Acrylsäure verwendet werden, da in diesem Fall eine Gelierung des Copolymerisats auftritt.

Weiterhin kann die Komponente a2 vorteilhaft ein Umsetzungsprodukt aus einer Carbonsäure mit einer polymerisierbaren, olefinisch ungesättigten Doppelbindung und Glycidylacrylat und/oder Glycidylmethacrylat oder eine mit einem ungesättigten Alkohol veresterte Polycarbonsäure oder ungesättigte Monocarbonsäure sein. Werden tertiäre Aminogruppen in das Acrylatcopolymerisat eingebaut, so kommen Umsetzungsprodukte aus einer Carbonsäure mit einer ethylenisch ungesättigten Doppelbindung, wobei Acrylsäure ausgenommen ist, mit Glycidylmethacrylat oder mit einem ungesättigten Alkohol veresterte Polycarbonsäuren oder ungesättigte Monocarbonsäure mit Ausnahme von Derivaten der Acrylsäure in Frage.

Ferner kann vorteilhaft als Komponente a2 ein Umsetzungsprodukt eines Polyisocyanats und eines ungesättigten Alkohols oder Amins verwendet werden. Als Beispiel hierfür sei das Reaktionsprodukt aus einem Mol Hexamethylendiisocyanat und zwei Mol Allylalkohol genannt.

Eine weitere vorteilhafte Komponente a2 ist ein Diester von Polyethylenglykol und/oder Polypropylenglykol mit einem mittleren Molekulargewicht von weniger als 1500, vorzugsweise von weniger als 1000 und Acrylsäure und/oder Methacrylsäure. In diesem Fall werden bei Einpolymerisation von Monomeren mit tertiären Aminogruppen keine Acrylsäurederivate als Komponente a2 verwendet. Ferner können als Komponente a2 auch Di- oder Polyvinylverbindungen von Kohlenwasserstoffen eingesetzt werden, z.B. Divinylbenzol.

Als Komponente a1 kommen vor allem Hydroxyalkylester der Acrylsäure und/oder Methacrylsäure mit einer primären Hydroxylgruppe in Betracht, z.B. Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate.

Vorteilhaft kann die Komponente a1 zumindest teilweise ein Umsetzungsprodukt aus einem Mol Hydroxyethylacrylat und/oder Hydroxyethylmethacrylat und durchschnittlich 2 Mol ε-Caprolacton sein.

Weiterhin kann die Komponente a1 vorteilhaft bis zu 75 Gewichts-%, besonders bevorzugt bis zu 50 Gewichts-%, bezogen auf die Gesamtmenge a1, ein hydroxylgruppenhaltiger Ester der Acrylsäure und/oder Methacrylsäure mit einer sekundären Hydroxylgruppe, insbesondere ein Umsetzungsprodukt aus Acrylsäure und/oder Methacrylsäure und dem Glycidylester einer Carbonsäure mit einem tertiären α-Kohlenstoffatom sein.

Als Beispiele seien 2-Hydroxypropylacrylat, 2-Hydroxybutylacrylat, 3-Hydroxybutylacrylat und die entsprechenden Methacrylate genannt.

Vorteilhafterweise werden als Verbindungen mit mindestens zwei cyclischen Carbonsäureanhydridgruppen pro Molekül, Addukte aus Trimellithsäureanhydrid und einem mehrwertigen Alkohol eingesetzt.

Dabei kommen als mehrwertige Alkohole beispielsweise Ethylenglykol, Propylenglykol, Neopentylglykol, Hexandiol-1,6-, Glycerin und Trimethylolpropan in Frage.

Weitere geeignete Polyanhydride sind Benzophenontetracarbonsäuredianhydride der allgemeinen Formel

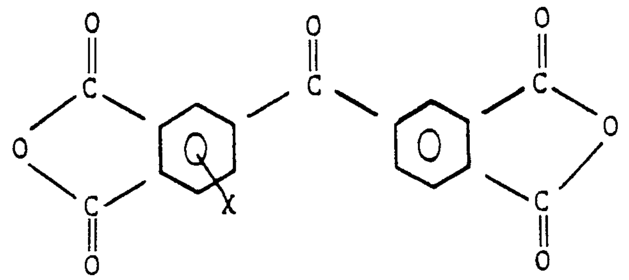

mit X = H, Halogen, $NO_2$, —COOH, —$SO_3H$. Als Beispiele seien 3,3',4,4'-Benzophenontetracarbonsäuredianhydrid, 2-Bromo-3,3',4,4'-benzophenontetracarbonsäuredianhydrid und 5-Nitro-3,3',4,4'-benzophenontetracarbonsäuredianhydrid genannt. Weitere geeignete Verbindungen mit mindestens zwei cyclischen Carbonsäureanhydridgruppen pro Molekül sind Cyclopentantetracarbonsäuredianhydrid, Diphenylethertetracarbonsäuredianhydrid, Hexacarbonsäuretrianhydrid von Benzol und von Cyclohexan sowie 1,2,3,4-Butantetracarbonsäuredianhydrid.

Bevorzugt werden als Di- oder Polyanhydridverbindung Copolymerisate von Maleinsäureanhydrid mit ethylenisch ungesättigten Verbindungen eingesetzt. Als letztere seien Styrol und Vinylester organischer Säuren genannt.

Beispiele für Verbindungen mit mindestens zwei Epoxidgruppen pro Molekül sind Kondensationsprodukte aus Epichlorhydrin und Bisphenol A.

Besonders bevorzugt sind cycloaliphatische Bisepoxide, die den Formeln (I) und (II) entsprechen:

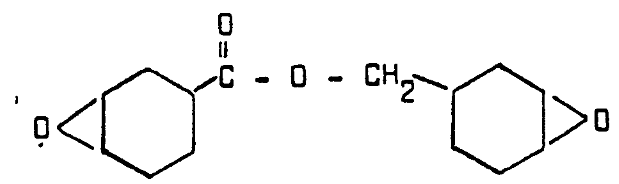

(I)

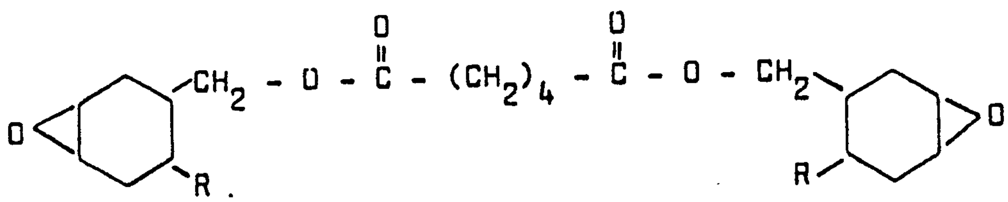

(II)

$R = H, CH_3$

Weitere bevorzugte Di- bzw. Polyepoxidverbindungen sind Polyglycidylester und/oder Polyglycidylether, wie Ethylenglykoldiglycidylester, Glycerinpolyglycidylether, Sorbitolpolyglycidylether, Trimethylolpropanpolyglycidylether und Pentaerythritpolyglycidylether.

Es kommen ferner auch epoxidierte Polybutadiene, epoxidgruppenhaltige Novolake und niedermolekulare Acrylatharze mit seitenständigen Oxirangruppen, beispielsweise Glycidylmethacrylatcopolymere, in Frage.

Die Erfindung betrifft auch ein Verfahren zur Herstellung der zuvor beschriebenen Zusammensetzung, bei dem zur Herstellung des hydroxylgruppenhaltigen Acrylatcopolymerisat

a1) 10 bis 60 Gewichts-%, vorzugsweise 15 bis 60 Gewichts-%, hydroxylgruppenhaltigen Estern der Acrylsäure und/oder Methacrylsäure mit zwei bis 14 Kohlenstoffatomen im Alkylrest,

a2) mehr als 3, jedoch maximal 30 Gewichts-%, vorzugsweise 5 bis 25 Gewichts-%, Monomeren mit mindestens zwei polymerisierbaren, olefinisch ungesättigten Doppelbindungen und

a3) 15 bis 82 Gewichts-%, vorzugsweise 40 bis 70 Gewichts-%, weiteren polymerisierbaren Monomeren mit einer olefinisch ungesättigten Doppelbindung, wobei die Summe der Komponenten a1, a2 und a3 100 Gewichts-% beträgt.

in einem organischen Lösungsmittel bei 80 bis 130°C, vorzugsweise bei 90 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die erhaltene Acrylatlösung mit organischen

Lösungsmitteln, gegebenenfalls Pigmenten, Füllstoffen, üblichen Hilfsstoffen, Additiven, der Verbindung mit mindestens 2 cyclischen Carbonsäureanhydridgruppen pro Molekül, der Verbindung mit mindestens 2 Epoxidgruppen pro Molekül und gegebenenfalls mit einem Vernetzungskatalysator durch Mischen und gegebenenfalls Dispergieren zu einer Überzugszusammensetzung verarbeitet wird. Bei der Herstellung des Acrylatcopolymerisats ist darauf zu achten, daß ein vorvernetztes, aber nicht geliertes Copolymerisat erhalten wird. Durch geeignete Polymerisationsbedingungen läßt sich überraschenderweise eine klare, transparente, nicht gelierte Lösung eines verzweigten Copolymerisats herstellen. Durch die Verwendung von Monomeren mit mindestens zwei ethylenisch ungesättigten Gruppen wird eine Vorvernetzung der Copolymerisatmoleküle hervorgerufen, die aufgrund der erfindungsgemäßen speziellen Reaktionsbedingungen trotzdem nicht zu gelierten Produkten führt. Diese speziellen Reaktionsbedingungen sind dadurch gekennzeichnet, daß man die Polymerisation bei Temperaturen von 80 bis 130°C, vorzugsweise 90 bis 120°C, durchführt. Die Polymerisation wird vorteilhafterweise so durchgeführt, daß eine Lösung des Polymerisats mit einem Festkörpergehalt von 40 bis 65 Gewichts-% resultiert. Die Auswahl des Initiators richtet sich nach dem Anteil der eingesetzten difunktionellen Monomeren. Bei niedrigem Anteil kann man die für solche Temperaturen üblichen Initiatoren, wie z.B. Peroxiester, verwenden. Bei höherem Anteil an difunktionellem Monomer werden vorzugsweise Initiatoren, wie z.B. Azoverbindungen, eingesetzt. Nach der Polymerisation wird die Polymerisatlösung durch Abdestillieren von Lösungsmittel auf den gewünschten Festkörpergehalt konzentriert, vorzugsweise auf Festkörpergehalte von 60 Gewichts-%. Die so erhaltenen klaren Copolymerisatlösungen besitzen, auf einen Festkörpergehalt von 50 Gewichts-% eingestellt, eine Viskosität von 0,4 bis 10 dPa.s.

Als Polymerisationsregler eignen sich insbesondere Mercaptogruppen enthaltende Verbindungen, vorzugsweise Mercaptoethanol.

Gegebenenfalls können bei den erfindungsgemäßen Verfahren Katalysatoren für die Epoxy-Carboxy-Vernetzung, beispielsweise tertiäre Amine, quartäre Ammoniumverbindungen, spezielle Chrom- und Zinnverbindungen eingesetzt werden. Besonders bevorzugt ist es, wenn als Katalysator ein tertiäres Amin, in einer Menge von 0,5 bis 10 Gewichts-%, bezogen auf das Gewicht der Epoxidkomponente, verwendet wird.

Der Einsatz eines externen Katalysators erübrigt sich in den meisten Fällen, bei denen Acrylatcopolymerisate bereits tertiäre Aminogruppen enthalten.

Die erfindungsgemäßen härtbaren Zusammensetzungen können kurz vor Gebrauch mit Pigmenten, Lösungsmitteln und Additiven vermischt werden.

Die erfindungsgemäßen härtbaren Überzugsmittel können durch Spritzen, Fluten, Tauchen, Walzen, Rakeln oder Streichen auf ein Substrat in Form eines Films eingebracht werden, wobei der Film anschließend zu einem festhaftenden Überzug gehärtet wird.

Die erfindungsgemäßen Überzüge weisen verbesserte Eigenschaften in bezug auf Benzinfestigkeit und Beständigkeit gegenüber Wasser bzw. Wasserdampf, verglichen mit den Überzügen gemäß der EP—A—134 691, auf. (Siehe Beispiel). Auch in Hinblick der Lösungsmittel- und Chemikalienbeständigkeit zeigen die erfindungsgemäßen Überzüge gute Eigenschaften.

Im folgenden wird die Erfindung anhand von Ausführungsbeispielen näher erläutert:

A) Herstellung erfindungsgemäßer Copolymerisate (Bindemittel A)

In den folgenden Beispielen beziehen sich, wenn nicht anders angegeben, alle Prozentangaben auf Gewichtsprozent, alle Angaben von Teilen auf Gewichtsteile. Die Festkörperwerte wurden in einem Umluftofen bestimmt nach 1 Stunde bei 130°C. Die Viskositäten wurden auf einem Kegel-Platte-Viskosimeter bestimmt.

Acrylatharz I

In einem 3 l Edelstahlkessel werden vorgelegt und auf 110°C aufgeheizt:

Vorlage: 386,5 Teile Xylol
193,2 Teile 1-Methoxipropylacetat-2
310,0 Teile Glycidylester einer handelsüblichen α,α'-Dialkylalkanmonocarbonsäure monocarbonsäure mit der Summenformel $C_{13}H_{24}O_3$ (Cardura E 10®)

Innerhalb 3 h wird gleichmäßig Zulauf 1 zudosiert

Zulauf 1
91 Teile Acrylsäure
86 Teile Hydroxiethylmethacrylat
219 Teile Styrol
150 Teile Butandioldimethacrylat
144 Teile Methylmethacrylat
40 Teile Mercaptoethanol

Innerhalb 3,5 h wird gleichmäßig Zulauf 2 zudosiert. Der Start beider Zuläufe erfolgt gleichzeitig.

Zulauf 2 32 Teile Azobisisobutyronitril
328,2 Teile Xylol
164,1 Teile 1-Methoxipropylacetat 2

Während der Polymerisation wird die Temperatur bei 110°C behalten, danach wird 3,5 h bei 130°C gehalten. Danach werden bei 100°C und 180 mbar 380 Teile Lösemittelgemisch abdestilliert.

Die so erhaltene Acrylatharzlösung hat einen Festkörper von 58,7%, eine Viskosität von 14,5 dPa.s und eine Säurezahl von 14,5.

Acrylatharz II

In einem 3 l-Edelstahlkessel werden vorgelegt und auf 110°C aufgeheizt:

Vorlage: 424,8 Teile Xylol
212,4 Teile 1-Methoxipropylacetat 2
310,0 Teile Glycidylester einer handelsüblichen
α,α'-Dialkylalkanmonocarbonsäuren mit der Summenformel $C_{13}H_{24}O_3$ (Cardura E 10®)

Innerhalb 3 h wird gleichmäßig Zulauf 1 zudosiert.

Zulauf 1 91 Teile Acrylsäure
161 Teile Hydroxiethylmethacrylat
219 Teile Styrol
150 Teile Butandioldimethacrylat
69 Teile Methylmethacrylat
40 Teile Mercaptoethanol

Innerhalb 3,5 h wird gleichmäßig Zulauf 2 zudosiert. Der Start beider Zuläufe erfolgt gleichzeitig.

Zulauf 2 28 Teile Azobisisobutyronitril
287,2 Teile Xylol
143,6 Teile 1-Methoxipropylacetat-2

Während der Polymerisation wird die Temperatur bei 110—112°C gehalten, danach wird die Lösung 4 h bei 130°C gehalten. Bei 100°C und 180 mbar werden 428 Teile Lösemittelgemisch abdestilliert. Die so erhaltene Acrylatharzlösung hat einen Festkörper von 61,4% (15' 180°C), eine Viskosität von 38,5 dPa.s und eine Säurezahl von 13,6.

Acrylatharz III

In einem 3 l-Edelstahlkessel werden vorgelegt:

Vorlage: 107,3 Teile Xylol
214,6 Teile Butylacetat 98/100

Die Vorlage wird auf 110°C aufgeheizt. Innerhalb von 3 h werden gleichmäßig zudosiert:

Zulauf 1: 140 Teile Styrol
119 Teile n-Butylacrylat
70 Teile t-Butylacrylat
140 Teile Butandioldimethacrylat
70 Teile Hydroxiethylmethacrylat
31,5 Teile Mercaptoethanol

Zulauf 2: 21 Teile 4-Vinylpyridin
20 Teile Xylol
20 Teile Butylacetat

Innerhalb von 4 h wird gleichmäßig zudosiert:

Zulauf 3 25,2 Teile Azobisisobutyronitril
131,6 Teile Xylol
263,2 Teile Butylacetat 98/100

Der Start der Zuläufe erfolgt gleichzeitig, während der Polymerisation wird die Temperatur bei 110°C gehalten, nach Ende von Zulauf 3 wird 3 h bei 110°C nachpolymerisiert.

Die erhaltene Acrylatharzlösung mit einen Festkörper von 48,7%, eine Viskosität von 1,4 dPa.s und eine Säurezahl von 1,3.

Herstellung und Prüfung von Klarlacken mit den Acrylatharzlösungen I—III

Lackrezeptur 1

Es werden gemischt

2,90 Teile Bisanhydrid aus Trimellithsäureanhydrid und 1,2-Ethandiol
7,80 Teile Methylethylketon
3,52 Teile 3,4-Epoxicyclohexylmethyl-3,4-epoxicyclohexancarboxylat

Zu dieser Lösung werden hinzugefügt

10,00 Teile Acrylatharz aus Beispiel I
0,28 Teile Metallsalzkatalysatorlösung (Beschleuniger Cordova AMC—2®)

Lackrezeptur 2

Es werden miteinander vermischt

2,9 Teile Bisanhydrid aus 2 Mol Trimellithsäureanhydrid und 1 Mol Ethandiol 1,2
7,10 Teile Methylethylketon
3,52 Teile Bis(3,4-Epoxicyclohexyl)adipat

Zu dieser Lösung werden gegeben:

10,00 Teile Acrylatharz aus Beispiel II
0,40 Teile Metallsalzkatalysatorlösung (Beschleuniger Cordova AMC—2®)

Lackrezeptur 3

Es werden miteinander gemischt:

2,90 Teile Bisanhydrid aus 2 Mol Trimellithsäureanhydrid und 1 Mol Ethandiol 1,2
7,20 Teile Methylethylketon
3,52 Teile 3,4-Epoxicyclohexyl-3,4-epoxicyclohexancarboxylat.

Zu dieser Lösung werden gegeben:

11,5 Teile Acrylatharz aus Beispiel III

Sofort nach Mischen werden von den Lacken Filme von 200 µm auf Glastafeln aufgebracht, nach 16 h Trocknung bei Raumtemperatur werden die Filme auf Härte, Benzinfestigkeit und Wasserbeständigkeit geprüft.

Die Pendelhärte wird nach König bestimmt, beim Benzintest wird ein mit FAM-Testbenzin getränktes Filzplättchen 1 h abgedeckt auf dem Film belassen, beim Wassertest wird ein großer Wassertropfen (Φ 5 cm) 2 h auf den Film belassen.

| Lackfilm aus Beispiel | Pendelhärte (König) | Benzinbeständigk. | Wasserfestigkeit |
|---|---|---|---|
| 1 | 63'' | keine Erweichung | keine Erweichung |
| | | keine Markierung | keine Markierung |
| 2 | 45'' | keine Erweichung | keine Erweichung |
| | | keine Markierung | keine Markierung |
| 3 | 91'' | keine Erweichung | keine Erweichung |
| | | keine Markierung | keine Markierung |

**Patentansprüche**

1. Härtbare Zusammensetzung, enthaltend ein lösliches hydroxylgruppenhaltiges Acrylatcopolymerisat, eine Verbindung mit mindestens zwei cyclischen Carbonsäureanhydridgruppen pro Molekül und eine Verbindung mit mindestens zwei Epoxidgruppen pro Molekül, dadurch gekennzeichnet, daß das hydroxylgruppenhaltige Acrylatcopolymerisat erhältlich ist aus

a1) 10 bis 60 Gewichts-% hydroxylgruppenhaltigen Estern der Acrylsäure und/oder Methacrylsäure mit zwei bis 14 Kohlenstoffatomen im Alkylrest.

a2) mehr als 3, jedoch maximal 30 Gewichts-% Monomeren mit mindestens zwei polymerisierbaren, olefinisch ungesättigten Doppelbindungen und

a3) 15 bis 82 Gewichts-% weiteren polymerisierbaren Monomeren mit einer olefinisch ungesättigten Doppelbindung, wobei die Summe der Komponenten a1, a2 und a3 100 Gewichts-% beträgt.

2. Härtbare Zusammensetzung nach Anspruch 1, dadurch gekennzeichnet, daß die weiteren polymerisierbaren Monomeren der Komponente a3 ausgewählt sind aus der Gruppe Styrol, Vinyltoluol, Acrylsäure, Methacrylsäure, Crotonsäure, Itaconsäure, Alkylester der Acryl- und Methacrylsäure, Alkoxyethylacrylate und Aryloxyethylacrylate und der entsprechenden Methacrylate, Ester der Malein- und Fumarsäure.

3. Härtbare Zusammensetzung nach Anspruch 1, dadurch gekennzeichnet, daß als Komponente a3 unter anderem 0,1 bis 20 Gewichts-%, vorzugsweise 1 bis 14 Gewichts-%, bezogen auf das Gesamtgewicht aller Monomerer, tertiäre Amine mit einer polymerisierbaren, olefinisch ungesättigten Doppelbindung verwendet werden.

4. Härtbare Zusammensetzung nach Anspruch 1 oder 2, dadurch gekennzeichnet, daß die Komponente a2 der allgemeinen Formel

$$CH_2{=}\overset{R}{\overset{|}{C}}{-}\overset{O}{\overset{\|}{C}}{-}X{-}(CH_2)_n{-}X{-}\overset{O}{\overset{\|}{C}}{-}\overset{R}{\overset{|}{C}}{=}CH_2$$

entspricht, in der bedeuten:

R = H oder $CH_3$,
X = O, NR', S mit R' = H, Alkyl, Aryl
n = 2 bis 8.

5. Härtbare Zusammensetzung nach Anspruch 3, dadurch gekennzeichnet, daß die Komponenten a2 der allgemeinen Formel

$$CH_2{=}\overset{CH_3}{\overset{|}{C}}{-}\overset{O}{\overset{\|}{C}}{-}X{-}(CH_2)_n{-}X{-}\overset{O}{\overset{\|}{C}}{-}\overset{CH_3}{\overset{|}{C}}{=}CH_2$$

entspricht, in der bedeuten:

X = O, NR, S mit R = H, Alkyl, Aryl
n = 2 bis 8.

6. Härtbare Zusammensetzung nach Anspruch 1 oder 2, dadurch gekennzeichnet, daß die Komponente a2 ein Umsetzungsprodukt aus einer Carbonsäure mit einer polymerisierbaren, olefinisch ungesättigten Doppelbindung und Glycidylacrylat und/oder Glycidylmethacrylat ist.

7. Härtbare Zusammensetzung nach Anspruch 3, dadurch gekennzeichnet, daß die Komponente a2 ein Umsetzungsprodukt aus einer Carbonsäure mit einer polymerisierbaren, olefinisch ungesättigten Doppelbindung mit Ausnahme von Acrylsäure und Glycidylmethacrylat ist.

8. Härtbare Zusammensetzung nach Anspruch 1 oder 2, dadurch gekennzeichnet, daß die Komponente a2 eine mit einem ungesättigten, eine polymerisierbare Doppelbindung enthaltenden Alkohol veresterte Polycarbonsäure oder ungesättigte Monocarbonsäure ist.

9. Härtbare Zusammensetzung nach Anspruch 3, dadurch gekennzeichnet, daß die Komponente a2 eine mit einem ungesättigten, eine polymerisierbare Doppelbindung enthaltenden Alkohol veresterte Polycarbonsäure oder ungesättigte Monocarbonsäure mit Ausnahme von Derivaten der Acrylsäure ist.

10. Härtbare Zusammensetzung nach Anspruch 1 bis 3, dadurch gekennzeichnet, daß die Komponente a2 durch Umsetzung eines Polyisocyanats mit ungesättigte, polymerisierbare Doppelbindung enthaltenden Alkoholen oder Aminen herstellbar ist.

11. Härtbare Zusammensetzung nach Anspruch 1 oder 2, dadurch gekennzeichnet, daß die Komponente a2 ein Diester von Polyethylenglykol und/oder Polypropylenglykol mit einem mittleren Molekulargewicht von weniger als 1500, bevorzugt weniger als 1000, und Acrylsäure und/oder Methacrylsäure ist.

12. Härtbare Zusammensetzung nach Anspruch 3, dadurch gekennzeichnet, daß die Komponente a2 ein Diester von Polyethylenglykol und/oder Polypropylenglykol mit einem mittleren Molekulargewicht von weniger als 1500, bevorzugt als 1000 und Methacrylsäure ist.

13. Härtbare Zusammensetzung nach Anspruch 1 bis 12, dadurch gekennzeichnet, daß die Komponente a1 ein Hydroxyalkylester der Acrylsäure und/oder Methacrylsäure mit einer primären Hydroxylgruppe ist.

14. Härtbare Zusammensetzung nach Anspruch 1 bis 13, dadurch gekennzeichnet, daß die Komponente a1 zumindest teilweise ein Umsetzungsprodukt aus einem Mol Hydroxyethylacrylat und/oder Hydroxyethylmethacrylat und durchschnittlich 2 Mol ε-Caprolacton ist.

15. Härtbare Zusammensetzung nach Anspruch 1 bis 14, dadurch gekennzeichnet, daß die Komponente a1 in einem Anteil von bis zu 75 Gewichts-%, vorzugsweise bis zu 50 Gewichts-%, bezogen auf die Gesamtmenge a1, ein hydroxylgruppenhaltiger Ester der Acrylsäure und/oder Methacrylsäure mit einer sekundären Hydroxylgruppe ist.

16. Härtbare Zusammensetzung nach Anspruch 15, dadurch gekennzeichnet, daß der hydroxylgruppenhaltige Ester ein Umsetzungsprodukt aus Acrylsäure und/oder Methacrylsäure mit dem Glycidylester einer Carbonsäure mit einem tertiären α-Kohlenstoffatom ist.

17. Härtbare Zusammensetzung nach Anspruch 1 bis 16, dadurch gekennzeichnet, daß die Verbindung mit mindestens zwei cyclischen Carbonsäureanhydridgruppen pro Molekül ein Addukt aus Trimetllithsäureanhydrid und einem mehrwertigen Alkohol ist.

18. Härtbare Zusammensetzung nach Anspruch 17, dadurch gekennzeichnet, daß die Verbindung mit mindestens zwei cyclischen Carbonsäureanhydridgruppen pro Molekül ein Addukt aus Trimellithsäureanhydrid und Ethylenglykol, Propylenglykol, Neopentylglykol, Hexandiol-1,6, Glycerin oder Trimethylolpropan ist.

19. Härtbare Zusammensetzung nach Anspruch 1 bis 16, dadurch gekennzeichnet, daß die Verbindung mit min-2 cyclischen Carbonsäureanhydridgruppen ein Copolymerisat von Maleinsäureanhydrid mit ethylenisch ungesättigten Monomeren ist.

20. Härtbare Zusammensetzung nach Anspruch 1 bis 19, dadurch gekennzeichnet, daß die Verbindung mit mindestens zwei Epoxidgruppen pro Molekül ein Bisepoxid der Formel (I) oder (II) ist.

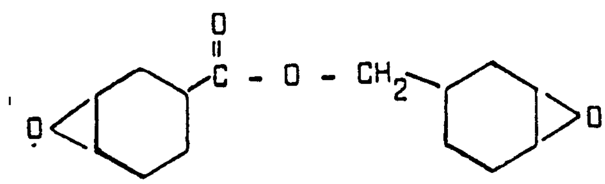

(I)

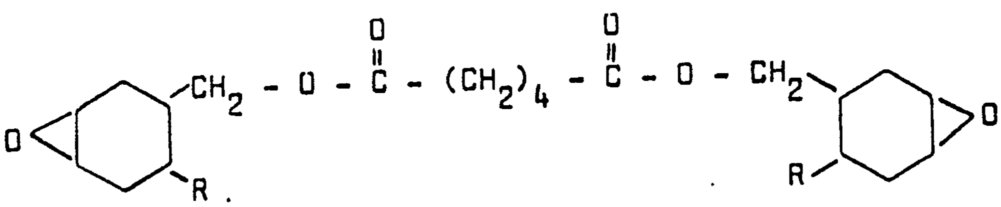

(II)

$R = H, CH_3$

21. Härtbare Zusammensetzung nach Anspruch 1 bis 19, dadurch gekennzeichnet, daß die Verbindung mit mindestens 2 Epoxidgruppen pro Molekül ein Polyglycidylether und/oder ein Polyglycidylester ist.

22. Härtbare Zusammensetzung nach Anspruch 1 bis 21, dadurch gekennzeichnet, daß das hydroxylgruppenhaltige Acrylatcopolymerisat erhältlich ist aus

a1) 15 bis 60 Gewichts-% hydroxylgruppenhaltigen Estern der Acrylsäure und/oder Methacrylsäure mit 2 bis 14 Kohlenstoffatomen im Alkylrest.

a2) 5 bis 25 Gewichts-% Monomeren mit mindestens zwei polymerisierbaren, olefinisch ungesättigten Doppelbindungen und

a3) 40 bis 70 Gewichts-% weiteren polymerisierbaren Monomeren mit einer olefinisch ungesättigten Doppelbindung,

wobei die Summe der Komponenten a1), a2) und a3) 100 Gewichts-% beträgt.

23. Verfahren zur Herstellung einer Überzugszusammensetzung auf der Basis der härtbaren Zusammensetzung nach Anspruch 1 bis 22, dadurch gekennzeichnet, daß zur Herstellung des hydroxylgruppenhaltigen Acrylatcopolymerisats die Monomeren a1), a2) und a3) in einem organischen Lösungsmittel bei 80 bis 130°C, vorzugsweise bei 90 bis 120°C, unter Verwendung von mindestens 0,5 Gewichts-%, vorzugsweise mindestens 2,5 Gewichts-%, bezogen auf das Gesamtgewicht der Monomeren, eines Polymerisationsreglers und unter Verwendung von Polymerisationsinitiatoren copolymerisiert werden, die erhaltene Acrylatllösung mit organischen Lösungsmitteln, gegebenenfalls Pigmenten, Füllerstoffen, üblichen Hilfsstoffen, Additiven, der Verbindung mit mindestens 2 cyclischen Carbonsäureanhydridgruppen pro Molekül, der Verbindung mit mindestens 2 Epoxidgruppen pro Molekül und gegebenenfalls mit einem Vernetzungskatalysator durch Mischen und gegebenenfalls Dispergieren zu einer Überzugszusammensetzung verarbeitet wird.

24. Verfahren nach Anspruch 23, dadurch gekennzeichnet, daß als Polymerisationsregler Mercaptogruppen enthaltende Verbindungen, vorzugsweise Mercaptoethanol, verwendet werden.

25. Verfahren nach Anspruch 23 bis 24, dadurch gekennzeichnet, daß als Polymerisationsinitiatoren Azoverbindungen und/oder Peroxiester eingesetzt werden.

26. Verfahren nach einem oder nach mehreren der Ansprüche 23 bis 25, dadurch gekennzeichnet, daß die Polymerisation zur Herstellung des hydroxylgruppenhaltigen Acrylatcopolymerisats so durchgeführt wird, daß eine Lösung des Polymerisats mit einem Festkörpergehalt von 40 bis 65 Gewichts-% resultiert.

27. Verfahren nach einem oder nach mehreren der Ansprüche 23 bis 26, dadurch gekennzeichnet, daß der Vernetzungskatalysator ein tertiäres Amin ist und in einer Menge von 0,5 bis 10 Gewichts-%, bezogen auf das Gewicht der Epoxidkomponente, verwendet wird.

**Revendications**

1. Composition durcissable contenant un copolymère d'acrylate soluble contenant des groupes hydroxyle, un composé contenant au moins deux groupes cycliques d'anhydride d'acide carboxylique par molécule et un composé contenant au moins deux groupes époxy par molécule, caractérisée en ce que le copolymère d'acrylate contenant des groupes hydroxyle peut être obtenu à partir de:

a1) 10 à 60% en poids d'esters, contenant des groupes hydroxyle, de l'acide acrylique et/ou de l'acide méthacrylique avec 2 à 14 atomes de carbone dans le groupe alkyle,

a2) plus de 3% en poids, mais au maximum 30% en poids, de monomères contenant au moins deux double liaisons oléfiniques insaturées polymérisables et

a3) 15 à 82% en poids d'autres monomères polymérisables qui contiennent une double liaison oléfinique insaturée,

la somme des constituants a1, a2 et a3 étant égale à 100% en poids.

2. Composition durcissable selon la revendication 1, caractérisée en ce qu'on choisit les autres monomères polymérisables du constituant a3 parmi les groupes suivants: styrène, vinyltoluène, acide acrylique, acide méthacrylique, acide crotonique, acide itaconique, esters alkyliques de l'acide acrylique et méthacrylique, d'acrylates d'alcoxyéthyle et d'acrylates d'aryloxyéthyle et des méthacrylates correspondants, esters de l'acide maléique et de l'acide fumarique.

3. Composition durcissable selon la revendication 1, caractérisée en ce qu'on met en oeuvre en tant que constituant a3, entre autres, de 0,1 à 20% en poids, de préférence de 1 à 4% en poids, par rapport au poids total de tous les monomères, d'amines tertiaires contenant une double liaison oléfinique insaturée polymérisable.

4. Composition durcissable selon la revendication 1 ou 2, caractérisée en ce que le constituant a2 répond à la formule générale

$$CH_2=\overset{R}{C}-\overset{O}{\overset{\|}{C}}-X-(CH_2)_n-X-\overset{O}{\overset{\|}{C}}-\overset{R}{C}=CH_2$$

dans laquelle

R = H ou $CH_3$,

X = O, NR' S avec R' = H, alkyle, aryle

n = de 2 à 8.

5. Composition durcissable selon la revendication 3, caractérisée en ce que le constituant a2 répond à la formule

$$CH_2=\overset{CH_3}{\overset{|}{C}}-\overset{O}{\overset{\|}{C}}-X-(CH_2)_n-X-\overset{O}{\overset{\|}{C}}-\overset{CH_3}{\overset{|}{C}}=CH_2$$

dans laquelle

X = O, NR, S avec R = H, alkyle, aryle

n = de 2 à 8.

6. Composition durcissable selon la revendication 1 ou 2, caractérisée en ce que le constituant a2 est un produit de réaction d'un acide carboxylique ayant une double liaison oléfinique insaturée polymérisable avec un acrylate de glycidyle et/ou un méthacrylate de glycidyle.

7. Composition durcissable selon la revendication 3, caractérisée en ce que le constituant a2 est un produit de réaction d'un acide carboxylique ayant une double liaison oléfinique insaturée polymérisable, à l'exception de l'acide acrylique et du méthacrylate de glycidyle.

8. Composition durcissable selon la revendication 1 ou 2, caractérisée en ce que le constituant a2 est un acide polycarboxylique estérifié par un alcool insaturé contenant une double liaison polymérisable, ou un acide monocarboxylique non saturé.

9. Composition durcissable selon la revendication 3, caractérisée en ce que le constituant a2 est un acide polycarboxylique estérifié par un alcool insaturé contenant une double liaison polymérisable, ou un acide monocarboxylique non saturé, à l'exception de dérivés de l'acide acrylique.

10. Composition durcissable selon l'une des revendications 1 à 3, caractérisée en ce que le constituant a2 est obtenu par réaction d'un polyisocyanate avec des alcools ou des amines contenant une double liaison insaturée polymérisable.

11. Composition durcissable selon la revendication 1 ou 2, caractérisée en ce que le constituant a2 est un diester de polyéthylène-glycol et/ou de polypropylène-glycol ayant un poids moléculaire moyen

inférieur à 1 500, de préférence inférieur à 1 000, et de l'acide acrylique et/ou de l'acide méthacrylique.

12. Composition durcissable selon la revendication 3, caractérisée en ce que le constituant a2 est un diester de polyéthylène-glycol et/ou de polypropylène-glycol ayant un poids moléculaire moyen inférieur à 1 500, de préférence inférieur à 1 000 et de l'acide méthacrylique.

13. Composition durcissable selon l'une quelconque des revendications 1 à 12, caractérisée en ce que le constituant a1 est un ester hydroxyalkylique de l'acide acrylique et/ou de l'acide méthacrylique, contenant un groupe hydroxyle primaire.

14. Composition durcissable selon l'une quelconque des revendications 1 à 13, caractérisée en ce que le constituant a1 est, au moins partiellement, un produit de réaction d'une mole d'acrylate d'hydroxyéthyle et/ou de méthacrylate d'hydroxyéthyle avec en moyenne 2 moles de ε-caprolactone.

15. Composition durcissable selon l'une quelconque des revendications 1 à 14, caractérisée en ce que le constituant a1 est, jusqu'à raison de 75% en poids, de façon préférentielle jusqu'à 50% en poids, par rapport à la quantité totale a1, un ester, contenant des groupes hydroxyle, de l'acide acrylique et/ou de l'acide méthacrylique, contenant un groupe hydroxyle secondaire.

16. Composition durcissable selon la revendication 15, caractérisée en ce que l'ester contenant un groupe hydroxyle est un produit de réaction d'acide acrylique et/ou d'acide méthacrylique avec l'ester glycidylique d'un acide carboxylique contenant un atome de carbone alpha tertiaire.

17. Composition durcissable selon l'une quelconque des revendications 1 à 16, caractérisée en ce que le composé contenant au moins deux groupes cycliques d'anhydride d'acide carboxylique par molécule est un produit d'addition d'anhydride d'acide trimellitique et d'un alcool polyvalent.

18. Composition durcissable selon la revendication 17, caractérisée en ce que le composé contenant au moins deux groupes cycliques d'anhydride d'acide carboxylique par molécule est un produit d'addition d'anhydride d'acide trimellitique et d'éthylène-glycol, de propylène-glycol, de néopentyle-glycol, d'hexane-diol-1,6, de glycérol ou de triméthylol-propane.

19. Composition durcissable selon l'une quelconque des revendications 1 à 16, caractérisée en ce que le composé contenant au moins deux groupes cycliques d'anhydride d'acide carboxylique est un copolymère d'anhydride d'acide maléique contenant des monomères éthyléniques insaturés.

20. Composition durcissable selon l'une quelconque des revendications 1 à 19, caractérisée en ce que le composé contenant au moins deux groupes époxy par molécule est un bisépoxyde de formule (I) ou (II).

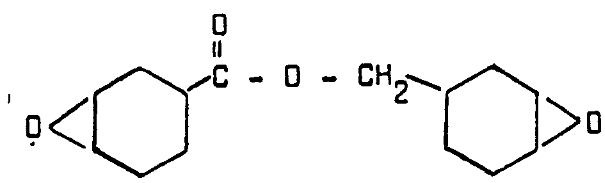

(I)

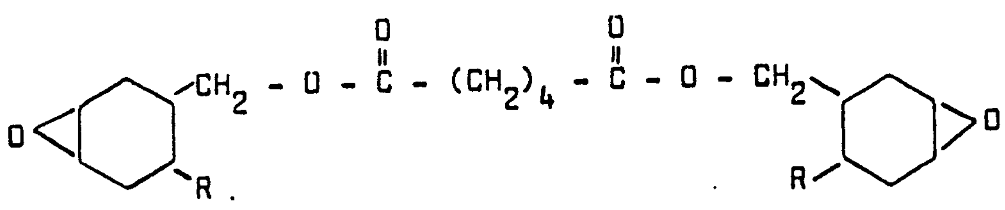

(II)

R = H, $CH_3$

21. Composition durcissable selon l'une quelconque des revendications 1 à 19, caractérisée en ce que le composé contenant au moins deux groupes époxy par molécule est un éther de polyglycidyle et/ou un ester de polyglycidyle.

22. Composition durcissable selon l'une quelconque des revendications 1 à 21, caractérisée en ce que le copolymère d'acrylate contenant des groupes hydroxyle est obtenu à partir de:

a1) 15 à 60% en poids d'esters, contenant des groupes hydroxyle, de l'acide acrylique et/ou de l'acide méthacrylique avec 2 à 14 atomes de carbone dans le groupe alkyle,

a2) 5 à 25% en poids de monomères contenant au moins deux double liaisons oléfiniques insaturées polymérisables et

a3) 40 à 70% en poids d'autres monomères polymérisables qui contiennent une double liaison oléfinique insaturée,

la somme des constituants a1, a2 et a3 étant égale à 100% en poids.

23. Procédé de préparation d'une composition de revêtement basée sur la composition durcissable selon l'une quelconque des revendications 1 à 22, caractérisé en ce que, pour préparer le copolymère d'acrylate contenant des groupes hydroxyle, on copolymérise les monomères a1), a2) et a3) dans un solvant, à une température comprise entre 80 et 130°C, de préférence entre 90 et 120°C, avec au moins 0,5% en poids, de préférence au moins 2,5% en poids, par rapport au poids total des monomères, d'un régulateur de polymérisation et au moyen d'initiateurs de polymérisation, la solution d'acrylate obtenue

étant transformée en une composition de revêtement au moyen de solvants organiques, le cas échéant de pigments, de matières de remplissage, d'additifs usuels, du composé contenant au moins deux groupes cycliques d'anhydride d'acide carboxylique par molécule du composé contenant au moins deux groupes époxy par molécule et, les cas échéant, au moyen d'un catalyseur de réticulation, par mélange et éventuellement dispersion.

24. Procédé selon la revendication 23, caractérisé en ce que l'on utilise en tant que régulateur de polymérisation des composés contenant des groupes mercapto, de préférence du mercaptoéthanol.

25. Procédé, selon les revendications 23 et 24, caractérisé en ce qu'on met en oeuvre en tant qu'initiateurs de polymérisation des composés azoïques et/ou des peroxyesters.

26. Procédé selon l'une ou plusieurs des revendications 23 à 25, caractérisé en ce que la polymérisation pour préparer le copolymère d'acrylate contenant des groupes hydroxyle est effectuée de manière telle qu'il en résulte une solution du polymérisat avec une teneur en corps solides comprise entre 40 et 65% en poids.

27. Procédé selon l'une ou plusieurs des revendications 23 à 26, caractérisé en ce que le catalyseur de réticulation est une amine tertiaire et qu'on le met en oeuvre à raison de 0,5 à 10% en poids par rapport au poids des constituants époxy.

**Claims**

1. A curable composition containing a soluble hydroxyl-containing acrylate copolymer, a compound possessing at least two cyclic carboxylic anhydride groups per molecule and a compound possessing at least two epoxide groups per molecule, wherein the hydroxyl-containing acrylate copolymer is obtainable from

a1) from 10 to 60% by weight of hydroxyl-containing esters of acrylic acid and/or methacrylic acid, where the alkyl radical is of two to 14 carbon atoms,

a2) more than 3, but not more than 30% by weight of monomers having at least two polymerizable, olefinically unsaturated double bonds and

a3) from 15 to 82% by weight of further polymerizable monomers having an olefinically unsaturated double bond, the sum of components a1, a2 and a3 being 100% by weight.

2. A curable composition as claimed in claim 1, wherein the further polymerizable monomers of component a3 are selected from the group consisting of styrene, vinyltoluene, acrylic acid, methacrylic acid, crotonic acid, itaconic acid, alkylesters of acrylic and methacrylic acid, alkoxyethyl acrylates and aryloxyethyl acrylates and the corresponding methacrylates, and esters of maleic and fumaric acid.

3. A curable composition as claimed in claim 1, wherein, inter alia, from 0.1 to 20% by weight, preferably from 1 to 14% by weight, based on the total weight of all monomers, of tertiary amines having a polymerizable, olefinically unsaturated double bond are used as component a3.

4. A curable composition as claimed in claim 1 or 2, wherein component a2 is of the formula

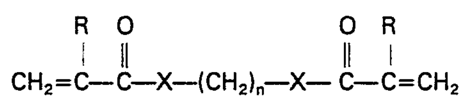

in which

R denotes H or $CH_3$,

X denotes O, NR', where R' is H, alkyl or aryl, or S and n denotes 2 to 8.

5. A curable composition as claimed in claim 3, wherein component a2 is of the formula

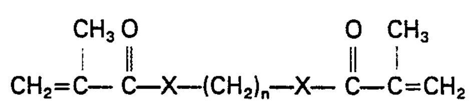

where

X denotes O, NR, where R is H, alkyl or aryl, or S and

n denotes 2 to 8.

6. A curable composition as claimed in claim 1 or 2, wherein component a2 is a reaction product of a carboxylic acid having a polymerizable, olefinically unsaturated double bond and glycidyl acrylate and/or glycidyl methacrylate.

7. A curable composition as claimed in claim 3, wherein component a2 is a reaction product of a carboxylic acid having a polymerizable, olefinically unsaturated double bond, with the exception of acrylic acid, and glycidyl methacrylate.

8. A curable composition as claimed in claim 1 or 2, wherein component a2 is a polycarboxylic acid or unsaturated monocarboxylic acid which is esterified with an unsaturated alcohol having a polymerizable double bond.

9. A curable composition as claimed in claim 3, wherein component a2 is a polycarboxylic acid or unsaturated monocarboxylic acid which is esterified with an unsaturated alcohol having a polymerizable double bond, with the exception of derivatives of acrylic acid.

10. A curable composition as claimed in claims 1 to 3, wherein component a2 can be prepared by

reacting a polyisocyanate with amines or alcohols having an unsaturated, polymerizable double bond.

11. A curable composition as claimed in claim 1 or 2, wherein component a2 is a diester of polyethylene glycol and/or polypropylene glycol, having a mean molecular weight of less than 1500, preferably less than 1000, and acrylic acid and/or methacrylic acid.

12. A curable composition as claimed in claim 3, wherein component a2 is a diester of polyethylene glycol and/or polypropylene glycol, having a mean molecular weight of less than 1500, preferably less than 1000, and methacrylic acid.

13. A curable composition as claimed in claims 1 to 12, wherein component a1 is a hydroxyalkyl ester of acrylic acid and/or methacrylic acid possessing a primary hydroxyl group.

14. A curable composition as claimed in claims 1 to 13, wherein component a1 at least partially comprises a reaction product of one mole of a hydroxyethyl acrylate and/or hydroxyethyl methacrylate and on average two moles of ε-caprolactone.

15. A curable composition as claimed in claims 1 to 14, wherein component a1 consists of up to 75% by weight, preferably up to 50% by weight, based on the total amount of a1, of a hydroxyl-containing ester of acrylic acid and/or methacrylic acid possessing a secondary hydroxyl group.

16. A curable composition as claimed in claim 15, wherein the hydroxyl-containing ester is a reaction product of acrylic acid and/or methacrylic acid with the glycidyl ester of a carboxylic acid having a tertiary α-carbon atom.

17. A curable composition as claimed in claims 1 to 16, wherein the compound having at least two cyclic carboxylic anhydride groups per molecule is an adduct of trimellitic anhydride and a polyhydric alcohol.

18. A curable composition as claimed in claim 17, wherein the compound having at least two cyclic carboxylic anhydride groups per molecule is an adduct of trimellitic anhydride and ethyleneglycol, propyleneglycol, neopentylglycol, hexane-1,6-diol, glycerol or trimethylolpropane.

19. A curable composition as claimed in claims 1 to 16, wherein the compound having at least 2 cyclic carboxylic anhydride groups is a copolymer of maleic anhydride with ethylenically unsaturated monomers.

20. A curable composition as claimed in claims 1 to 19, wherein the compound having at least two epoxide groups per molecule is a bisepoxide of the formula (I) or (II)

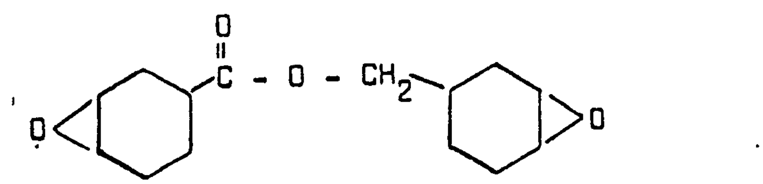

(I)

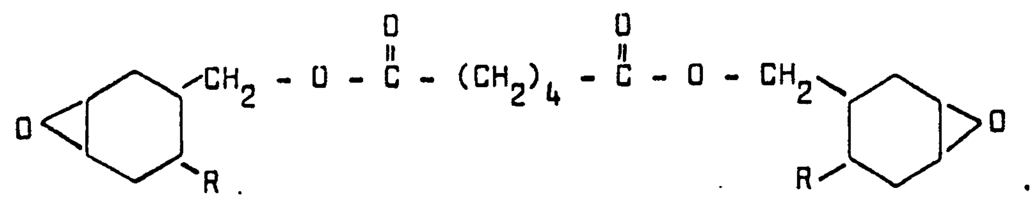

(II)

$R = H, CH_3$

21. A curable composition as claimed in claims 1 to 19, wherein the compound having at least 2 epoxide groups per molecule is a polyglycidyl ether and/or a polyglycidyl ester.

22. A curable composition according to claim 1—21, wherein, the hydroxyl-containing acrylate copolymer is obtainable from

a1) from 15 to 60% by weight of hydroxyl-containing esters of acrylic acid and/or methacrylic acid, where the alkyl radical is of 2 to 14 carbon atoms.

a2) from 5 to 25% by weight of monomers possessing at least two polymerizable, olefinically unsaturated double bonds and

a3) from 40 to 70% by weight of further polymerizable monomers having an olefinically unsaturated double bond, the sum of components a1), a2) and a3) being 100% by weight.

23. A process for the preparation of a coating composition based on the curable composition according to claims 1 to 22, in order to prepare the hydroxyl-containing acrylate copolymer, the monomers a1), a2) and a3) are copolymerized in an organic solvent at from 80 to 130°C, preferably from 90 to 120°C, using at least 0.5% by weight, preferably 2.5% by weight, based on the total weight of the monomers, of a polymerization regulator and using polymerization initiators, and the resulting acrylate solution, together with organic solvents, if appropriate pigments, fillers, conventional assistants, additives, the compound having at least two cyclic carboxylic anhydride groups per molecule, the compound having at least two epoxide groups per molecule and, if appropriate, a crosslinking catalyst, is processed to a coating composition by mixing and, if required, dispersing.

24. A process as claimed in Claim 23, wherein the polymerization regulators used are compounds containing mercapto groups, preferably mercaptoethanol.

25. A process as claimed in Claim 23 or 24, wherein the polymerization initiators used are azo compounds and/or peroxy esters.

26. A process as claimed in one or more of Claims 23 to 25, wherein the polymerization for the preparation of the hydroxyl-containing acrylate copolymer is carried out in such a way that a solution of the polymer having a solids content of 40 to 65% by weight results.

27. A process as claimed in one or more of claims 23 to 26, wherein the crosslinking catalyst is a tertiary amine and is used in an amount of from 0.5 to 10% by weight, based on the weight of the epoxide component.